# EUROPEAN PATENT APPLICATION

(11) **EP 4 576 919 A1**
(43) Date of publication of application: **25.06.2025**
(21) Application number: 23878961.4
(22) Date of filing: 08.10.2023
(51) Int. Cl.: H04W 74/08

(54) **RANDOM ACCESS METHOD AND APPARATUS**

(30) Priority: 19.10.2022 CN 202211282421
(71) Applicant: Huawei Technologies Co., Ltd., Shenzhen, Guangdong 518129 (CN)
(72) Inventor: LI, Chenwan, Shenzhen, Guangdong 518129 (CN)
(74) Representative: MERH-IP Matias Erny Reichl Hoffmann Patentanwälte PartG mbB
(86) International application number: PCT/CN2023/123297
(87) International publication number: WO 2024/082969

(57) **Abstract**

This application discloses a random access method and an apparatus. The method includes: A first device sends first information to a terminal device within coverage. When a first service or first signaling initiated by the terminal exists in the terminal device, a first access resource may be selected from an access resource in the first information, and then an access request message is sent to the first device on the first access resource. It may be determined, based on response information of the first device, that the first service or the first signaling can be transmitted to the first device. The terminal device determines a time at which the terminal device needs to perform access, reducing an uplink service processing delay.

## Description

This application claims priority to Chinese Patent Application No. CN202211282421.9, filed with the China National Intellectual Property Administration on October 19, 2022, and entitled "RANDOM ACCESS METHOD AND APPARATUS", which is incorporated herein by reference in its entirety.

### TECHNICAL FIELD

Embodiments of this application relate to the communication field, and in particular, to a random access method and an apparatus.

### BACKGROUND

A random access (random access, RA) process is used to establish uplink synchronization between a terminal device and a network device. The terminal device sends a random access request to the network device, where the random access request includes a random access preamble. The network device sends a random access response (random access response, RAR) message to the terminal device. After receiving the RAR, the terminal device transmits a message based on RAR scheduling.

Radio frequency identification (radio frequency identification, RFID) is used as an example. RFID is mainly applied to identification. RFID may be further used for reading and writing user data. A reader delivers a paging command, where the paging command includes a tag identifier, and a tag corresponding to the identifier may perform access. However, current services in RFID are all mobile terminated (mobile terminated, MT) services, where actively triggering an access procedure by a terminal is not supported.

### SUMMARY

This application provides a random access method and an apparatus, to reduce an uplink service processing delay.

A first aspect of this application provides a random access method. The method includes: A terminal device receives first information from a first device, where the first information includes an access resource of the terminal; the terminal device determines a first access resource based on the first information; the terminal device sends an access request message to the first device on the first access resource; the terminal device receives response information from the first device; and the terminal device transmits a first service or first signaling to the first device, where the first service is a terminal-initiated service, and the first signaling is a terminal-initiated signaling procedure.

In the foregoing aspect, the first device sends the first information to the terminal device within coverage in a broadcast, multicast, or unicast manner. When the first service or the first signaling initiated by the terminal exists in the terminal device, the first access resource may be selected from a time domain resource in the first information, and then the access request message is sent on the first access resource. It may be determined, based on the response information of the first device, that the first service or the first signaling can be transmitted to the first device. The terminal device determines a time at which the terminal device needs to perform access, reducing an uplink service processing delay.

In a possible implementation, the first information is one of the following: a beacon frame, a system message, a synchronization signal, or a reference signal.

In the foregoing possible implementation, a plurality of manners in which the terminal accesses the time domain resource are provided, to improve flexibility of the solution.

In a possible implementation, the first information includes time domain configuration information, the first access resource includes a first access time domain resource, and the time domain configuration information indicates whether there is the first access time domain resource at a sending moment of the first information, or after a time period T following a transmission completion moment of the first information.

In the foregoing possible implementation, a plurality of manners of directly indicating that there is the first access time domain resource at a specific moment are provided, to improve flexibility of the solution.

In a possible implementation, the first information includes time domain configuration information, the first access resource includes a first access time domain resource, and the time domain configuration information indicates that there is the first access time domain resource after every N first transmission periodicities, there is the first access time domain resource after every N first transmission periodicities and a total quantity of first access time domain resources is M, or in a time period T1, there is the first access time domain resource after every N first transmission periodicities, where M and N are positive integers, and the first transmission periodicity is a transmission periodicity of the first information.

In the foregoing possible implementation, a periodic time domain configuration is provided, and the time domain configuration may further limit the quantity of first access time domain resources by using a quantity of resources or time, to improve flexibility of the solution.

In a possible implementation, the first information includes frequency domain configuration information, the first access resource includes a first access frequency domain resource, and the frequency domain configuration information indicates that the first access frequency domain resource and the first information are a same resource block RB, and indicates a quantity of offset RBs and an offset direction of the RB that the first information is on.

In the foregoing possible implementation, a plurality of manners of indicating a resource block that a frequency domain resource is on are provided.

In a possible implementation, the frequency domain configuration information further indicates that the first access frequency domain resource is a frequency division unit in a specific RB.

In the foregoing possible implementation, a frequency division configuration is sent, so that the terminal device has more frequency domain resources when initiating access.

In a possible implementation, the time domain configuration information includes one or more quantities of resources.

In the foregoing possible implementation, a plurality of access time domain resources may be configured once in a single configuration, to improve flexibility of the solution.

In a possible implementation, the method further includes: The terminal device receives second information from the first device, where a second access resource occupied by the second information and/or a second access resource occupied by a procedure triggered by the second information fully or partially collide or collides with the first access resource; and the terminal device sets a colliding first access resource to a deactivated state, where the deactivated state indicates that the colliding first access resource is not available for an access procedure.

In the foregoing possible implementation, when a collision occurs between a periodic access resource and an uplink and downlink service resource, that is, when the second access resource occupied by the second information from the first device and/or the second access resource occupied by the procedure triggered by the second information fully or partially collide or collides with the first access resource, periodic access resource configuration may be suspended, that is, the first access resource may be set to a deactivated state, to reduce a collision probability and mutual interference during transmission. When uplink and downlink services are completed, the first device notifies the terminal device to reactivate the access resource. In this way, the terminal device can obtain an effective resource configuration in time.

A second aspect of this application provides a random access method. The method includes: A first device broadcasts first information, where the first information includes an access resource of a terminal; the first device receives an access request message from the terminal device on a first access resource, where the first access resource is determined by the terminal device based on the first information; and the first device sends response information to the terminal device.

In the foregoing aspect, the first device sends the first information to the terminal device within coverage. When the first service or the first signaling initiated by the terminal exists in the terminal device, the first access resource may be selected from the access resource in the first information, and then the access request is sent on the first access resource. It may be determined, based on the response information of the first device, that the first service or the first signaling can be transmitted to the first device. The terminal device determines a time at which the terminal device needs to perform access, reducing an uplink service processing delay.

In a possible implementation, the first information is one of the following: a beacon frame, a system message, a synchronization signal, or a reference signal.

In a possible implementation, the first information includes time domain configuration information, the first access resource includes a first access time domain resource, and the time domain configuration information indicates whether there is the first access time domain resource at a sending moment or a transmission completion moment of the first information, or after a time period T following the transmission completion moment of the first information.

In a possible implementation, the first information includes time domain configuration information, the first access resource includes a first access time domain resource, and the time domain configuration information indicates that there is the first access time domain resource after every N first transmission periodicities, there is the first access time domain resource after every N first transmission periodicities and a total quantity of first access time domain resources is M, or in a time period T1, there is the first access time domain resource after every N first transmission periodicities, where M and N are positive integers, and the first transmission periodicity is a transmission periodicity of the first information.

In a possible implementation, the first information includes frequency domain configuration information, the first access resource includes a first access frequency domain resource, and the frequency domain configuration information indicates that the first access frequency domain resource and the first information are a same resource block RB, and indicates a quantity of offset RBs and an offset direction of the RB that the first information is on.

In a possible implementation, the frequency domain configuration information further indicates that the first access frequency domain resource is a frequency division unit in a specific RB.

In a possible implementation, the time domain configuration information includes one or more quantities of resources.

In a possible implementation, the first device may transmit first service data or the first signaling to a core network based on a transmission identifier. The transmission identifier may be preconfigured in the terminal device or a SIM card of the terminal device, and the transmission identifier indicates a transmission service, a transmission channel, or a transmission resource. The transmission identifier may also be represented as a slice identifier. The first device may obtain the transmission identifier from the first service data or the signaling sent by the terminal, or may determine the transmission identifier on the access resource. The following uses an example in which the first device transmits the transmission identifier and the first service data to the core network, where the first service data may alternatively be replaced with the first signaling. The first device may send the transmission identifier and the first service data to the core network device, and the core network device forwards the transmission identifier and the first service data to an application layer based on the transmission identifier. The transmission identifier may be transmitted to a first network together with the first service data, or may be transmitted separately. The first device may determine, based on the transmission identifier, an address of the core network for transmission, and send the first service data to the core network device. Correspondingly, the core network device may determine, based on the transmission identifier, an address of an uplink server for transmission, and send the first service data to an application layer server. The first device may quickly determine a network resource to be used for data transmission, reducing an uplink delay.

In a possible implementation, the first device determines the transmission identifier based on a specific resource accessed by the terminal device, and transmits data and the transmission identifier to the core network device and the application server.

In a possible implementation, the first service data carries address information, and the network device or the core network device may parse the address information, to transmit data to the application layer. After obtaining the address information, the network device sends the first service data to the core network device, and then the core network device sends the first service data to the application layer server.

In a possible implementation, an air interface resource corresponding to a transmission path or tunnel of the core network is allocated. The terminal device may select a corresponding resource that matches a service requirement of the terminal device to access a network and transmit data. The first device may determine the transmission identifier, the transmission path, or a transmission tunnel address based on a resource position at which the terminal sends the first service data, and send the first service data and/or the transmission identifier to the core network device. The core network device then sends the first service data to the application layer server.

A third aspect of this application provides an encoding transmission apparatus. The apparatus may implement the method according to the first aspect or any one of the possible implementations of the first aspect. The apparatus includes a corresponding unit or module configured to perform the foregoing method. The unit or module included in the apparatus can be implemented by software and/or hardware. For example, the apparatus may be a network device, or may be a chip, a chip system, a processor, or the like that supports a network device in implementing the foregoing method, or may be a logic module or software that can implement all or some functions of a network device.

A fourth aspect of this application provides an encoding transmission apparatus. The apparatus may implement the method according to the second aspect or any one of the possible implementations of the second aspect. The apparatus includes a corresponding unit or module configured to perform the foregoing method. The unit or module included in the apparatus can be implemented by software and/or hardware. For example, the apparatus may be a network device, or may be a chip, a chip system, a processor, or the like that supports a network device in implementing the foregoing method, or may be a logic module or software that can implement all or some functions of a network device.

A fifth aspect of this application provides a computer device, including a processor, where the processor is coupled to a memory, the memory is configured to store instructions, and when the instructions are executed by the processor, the computer device is enabled to implement the method according to the first aspect or any one of the possible implementations of the first aspect. For example, the computer device may be a network device, or may be a chip, a chip system, or the like that supports the network device in implementing the foregoing method.

A sixth aspect of this application provides a computer device, including a processor, where the processor is coupled to a memory, the memory is configured to store instructions, and when the instructions are executed by the processor, the computer device is enabled to implement the method according to the second aspect or any one of the possible implementations of the second aspect. For example, the computer device may be a network device, or may be a chip, a chip system, or the like that supports the network device in implementing the foregoing method.

A seventh aspect of this application provides a computer-readable storage medium. The computer-readable storage medium stores instructions. When the instructions are executed by a processor, the method provided in the first aspect or any one of the possible implementations of the first aspect, or the second aspect or any one of the possible implementations of the second aspect is implemented.

An eighth aspect of this application provides a computer program product. The computer program product includes computer program code. When the computer program code is executed on a computer, the method provided in the first aspect or any one of the possible implementations of the first aspect, or the second aspect or any one of the possible implementations of the second aspect is implemented.

### BRIEF DESCRIPTION OF DRAWINGS

FIG. 1 is a diagram of a structure of a wireless communication system according to an embodiment of this application;
FIG. 2 is a diagram of a structure of another wireless communication system according to an embodiment of this application;
FIG. 3 is a diagram of a structure of another wireless communication system according to an embodiment of this application;
FIG. 4 is a schematic flowchart of a random access method according to an embodiment of this application;
FIG. 5 is a diagram of a channel indication according to an embodiment of this application;
FIG. 6 is a diagram of another channel indication according to an embodiment of this application;
FIG. 7 is a diagram of a frequency division unit according to an embodiment of this application;
FIG. 8 is a diagram of another channel indication according to an embodiment of this application;
FIG. 9 is a diagram of a structure of a random access apparatus according to an embodiment of this application;
FIG. 10 is a diagram of a structure of another random access apparatus according to an embodiment of this application;
FIG. 11 is a diagram of a structure of a computer device according to an embodiment of this application; and
FIG. 12 is a diagram of a structure of another computer device according to an embodiment of this application.

### DESCRIPTION OF EMBODIMENTS

Embodiments of this application provide a random access method and an apparatus, to reduce an uplink service processing delay.

The following describes embodiments of this application with reference to the accompanying drawings. It is clear that the described embodiments are merely some rather than all of embodiments of this application. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances so that embodiments described herein can be implemented in an order other than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The specific term "example" herein means "used as an example, embodiment or illustration". Any embodiment described as an "example" is not necessarily explained as being superior or better than other embodiments.

In addition, to better describe this application, numerous specific details are given in the following specific implementations. A person skilled in the art should understand that this application can also be implemented without some specific details. In some instances, methods, means, elements, and circuits that are well-known to a person skilled in the art are not detailed, so that the subject matter of this application is highlighted.

Embodiments of this application are mainly applied to a 5G new radio (new radio, NR) system, and may also be applied to another communication system.

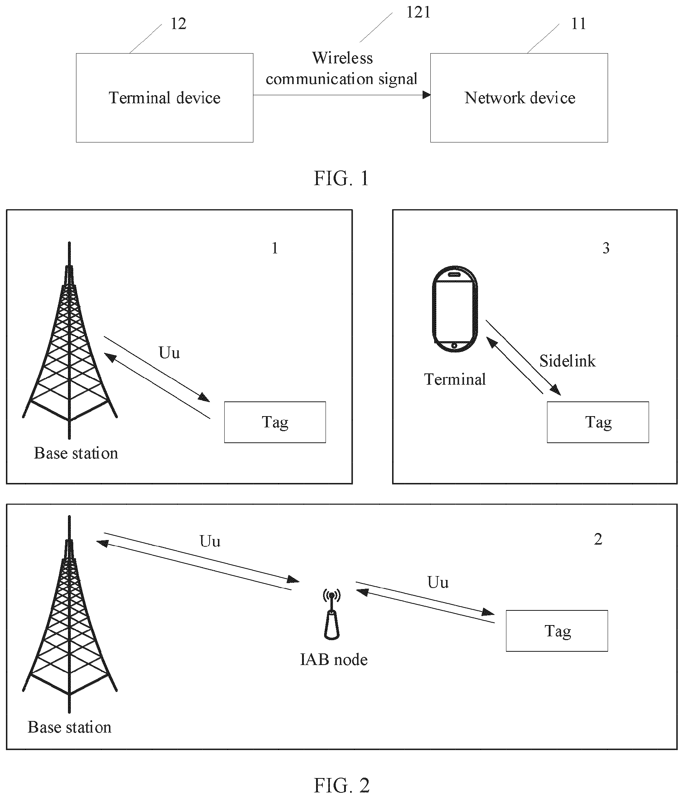

FIG. 1 shows a wireless communication system according to an implementation of an embodiment of this application. The wireless communication system includes a network device 11 and a terminal device 12 that are configured to operate in the wireless communication system. For simplicity, the wireless communication system shown in FIG. 1 includes only one network device 11 and one terminal device 12. However, without departing from the scope of embodiments of this application, the wireless communication system may include any quantity of terminal devices 12 and any quantity of network devices 11. In the wireless communication system, the terminal device 12 is configured to send a wireless communication signal 121 to the network device 11, where the communication signal 121 includes a random access preamble. Therefore, the communication signal 121 may be any control signal according to standards such as LTE and NR.

For example, the network device is a reader, and the terminal device is a tag. User equipment (user equipment, UE) may also be within coverage provided by the reader. When the reader is a terminal device, communication between the reader and the UE may be considered as transmission between terminals. When the reader is a base station, communication between the reader and the UE is via a Uu interface, that is, this communication is air interface communication. As shown in FIG. 2, the following is an example: 1. The base station is connected to the UE (tag) via the Uu. 2. The UE is connected to an IAB node via the Uu, and the IAB node is connected to the base station via the Uu. 3. The terminal device is connected to the tag through a sidelink (sidelink).

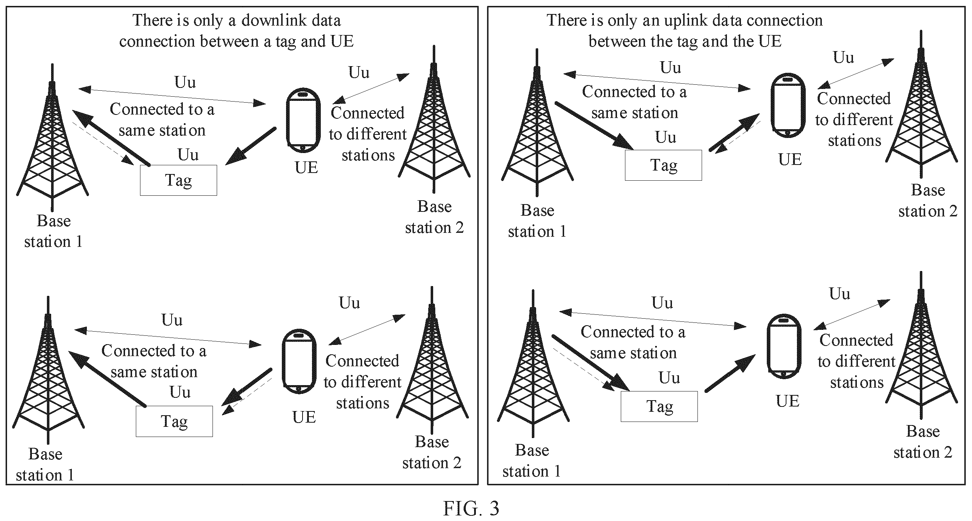

In addition, optionally, another split architecture may also be supported. FIG. 3 is a diagram of a split architecture, that is, there is only uplink (or downlink) data connection between the tag and the reader (for example, the base station), and there is only downlink (or uplink) data connection between the tag and the UE or an excitation source (a helper), where the UE and the tag connect to different stations. A dashed line indicates providing a carrier or a function, and a thick solid line indicates data transmission connection.

The present invention is also applicable to a 3rd generation partnership project (3rd generation partnership project, 3GPP) long term evolution (long term evolution, LTE) technology, a universal mobile telecommunications system (universal mobile telecommunications system, UMTS), a CDMA system, a wireless local area network (wireless local area network, WLAN), or a 5G (the fifth generation) wireless communication system in the future. The present invention may also be applicable to a low-power reflective communication system or a communication system with a power level of less than a milliwatt.

A terminal device, which is also referred to as UE, a mobile station (mobile station, MS), a mobile terminal (mobile terminal, MT), or the like, is a device that provides voice and/or data connectivity for a user, for example, a handheld device or a vehicle-mounted device having a wireless connection function. Currently, examples of some terminals are as follows: a mobile phone (mobile phone), a tablet computer, a notebook computer, a handheld computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in smart grid (smart grid), a wireless terminal in transportation safety (transportation safety), a wireless terminal in a smart city (smart city), a wireless terminal in a smart home (smart home), and the like.

An access network device is a radio access network (radio access network, RAN) node (or device) that connects a terminal to a wireless network, and may also be referred to as a base station. Currently, examples of some RAN nodes are: a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or home NodeB, HNB), a baseband unit (baseband unit, BBU), a wireless fidelity (wireless fidelity, Wi-Fi) access point (access point, AP), or the like. In addition, in a network structure, an access network device may include a central unit (central unit, CU) node, a distributed unit (distributed unit, DU) node, or a RAN device including a CU node and a DU node. The RAN device including the CU node and the DU node splits protocol layers of an eNB in a long term evolution (long term evolution, LTE) system. Functions of some protocol layers are centrally controlled by the CU, functions of some or all of the remaining protocol layers are distributed in the DU, and the CU centrally controls the DU. The access network device may also be a reader device.

Core network device: The core network device is a general term of a plurality of functional entities that are used on a network side for user management, data transmission, and base station configuration, and includes an access and mobility management function (access and mobility management function, AMF), a user plane function (user plane function, UPF), a session management function (session management function, SMF), and the like.

Tag: An electronic tag, namely, a radio frequency identification (radio frequency identification, RFID) tag is a common term for RFID. In addition, radio frequency identification technologies may be classified into three types: active, passive, and semi-active. A passive tag may also be referred to as passive IoT UE, namely, a passive internet of things device. Therefore, the passive tag may also be considered as a terminal.

A reader: The reader is a handheld or fixed device that reads (and sometimes writes) tag information in an original definition. The reader may also be understood as a device that communicates with a tag, and may be in a form of a terminal, a base station, or a device having read and write functions. The reader may alternatively be an IAB node.

Helper/Incentive source: The helper/incentive source may be a terminal, a base station, or a small cell. There is only downlink data transmission between the device and a tag, and there is uplink and downlink data transmission between the device and a reader. Connection may be implemented via an air interface or in a wired manner.

A main application scenario of RFID is identification. RFID may be further used for reading and writing user data. A reader delivers a paging command, where the paging command includes a tag identifier, and a tag corresponding to the identifier may perform access. However, current services in RFID are all mobile terminated (mobile terminated, MT) services, where actively triggering an access procedure by a terminal is not supported.

Based on the diagram of the structure shown in FIG. 2, the tag may be connected to the base station, the IAB, or the terminal device. In this case, a first device in embodiments of this application may be a network device, a terminal device, or another node controlled by a network. In embodiments of this application, an example in which the first device is a network device is used.

To resolve the foregoing problem, an embodiment of this application provides a random access method. The method is described as follows.

In this embodiment of this application, a network device may be replaced with a terminal device or another node controlled by a network, for example, IAB or a network control unit.

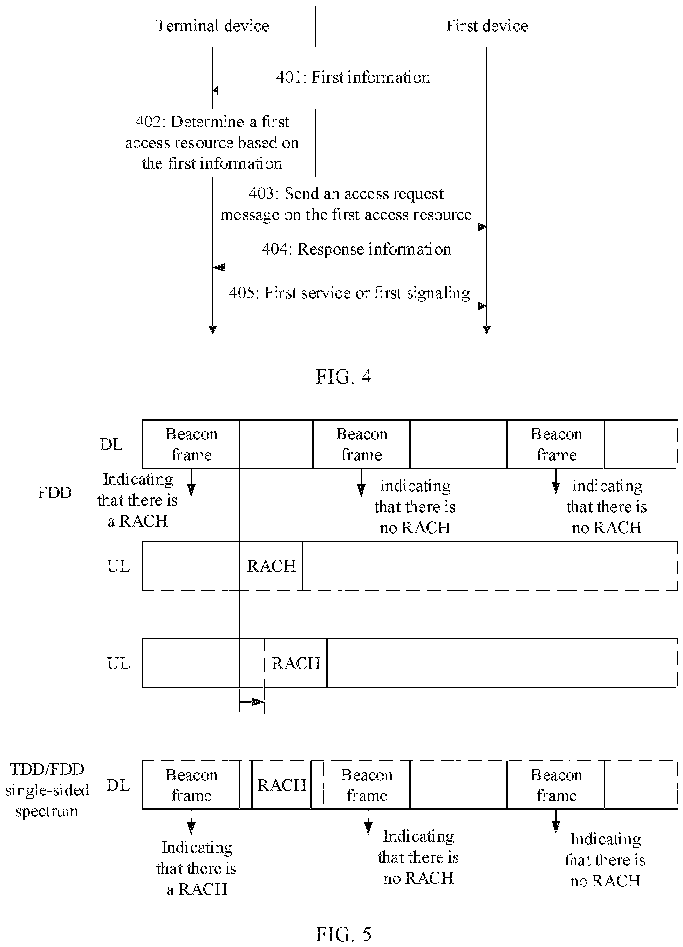

FIG. 4 is a schematic flowchart of a random access method according to an embodiment of this application. The method includes the following steps.

Step 401: A first device sends first information to a terminal device, and correspondingly, the terminal device receives the first information from the first device, where the first information includes an access resource of the terminal.

In this embodiment, the network device sends first information to a terminal device within coverage. The first information may indicate a time domain resource that can be used by the terminal device for random access. Correspondingly, the terminal device within coverage of the network device may receive the first information. The first information may be sent in a broadcast, multicast, paging, or unicast manner. This is not limited herein. When the first information is sent in the broadcast, multicast, or paging manner, a terminal device in a broadcast, multicast, or paging range may determine, according to a requirement of the terminal device, whether to trigger an access procedure.

For example, a base station (which may alternatively be a terminal reader) sends configuration information of a random access channel (random access channel, RACH). Specifically, the configuration information may be indicated by the first information, for example, a beacon (Beacon) frame signal, a system message (system information or a master information block, SI or MIB), a synchronization signal, a reference signal, or a query (Query) instruction that is sent periodically, or a select (Select) instruction, a paging (Paging) command, a synchronization signal, or a reference signal that is sent periodically or non-periodically. In this embodiment of this application, the beacon is used as an example.

The beacon signal and/or system message/select/query/reference signal/synchronization signal may be used to configure an access resource for a semi-passive/active (Semi-Passive/Active) tag, and the select/query may be used to configure an access resource for a passive tag. To summarize, different messages may be used to configure access resources for different types of terminals.

The access resource in this embodiment of this application may be a random access channel, a resource for establishment, initiated by the terminal, of a connection to the network device, or a resource for the terminal to send a first piece of uplink data or a first uplink signal to a network side. This is not limited herein. In this embodiment of this application, a RACH resource is used as an example.

The first information includes time domain configuration information, the first access resource includes a first access time domain resource, the time domain configuration information is configuration information of the first access time domain resource, and the time domain configuration information indicates whether there is the first access time domain resource at a sending moment of the first information or after a time period T following a transmission completion moment of the first information.

For example, the time domain configuration information indicates whether there is a RACH resource (or the first access time domain resource) for the terminal device after the first information, or whether there is a RACH channel (one random access occasion (RACH occasion, RO) or n ROs specified in a protocol) in a continuous time period T after the first information. The time domain configuration information may indicate, by using 1 bit or different sequences, whether there is a RACH resource. Optionally, a first parameter may be further carried to indicate a maximum quantity of ROs, a maximum quantity of slots, or a maximum quantity of time domain resources, that is, indicate a maximum quantity of slots or access opportunities that can be used by the terminal device for random access. The first parameter may directly indicate the maximum quantity of access time domain resources, or may implicitly indicate the maximum quantity of access time domain resources through calculation. For example, the parameter is Q. In this case, the maximum quantity of access time domain resources may be indicated by 2 to the power of Q.

Further, the time domain configuration information may include one or more quantities of resources, that is, may indicate a continuous time period T (one RO) or a plurality of ROs (which may be a plurality of time domain access resource opportunities) after T1 following signaling configuration.

For an example of the time domain configuration information, refer to FIG. 5. The first information may indicate, on an uplink spectrum, whether there is a RACH resource and whether there is a RACH channel in a time interval T. This manner is applicable to a frequency division duplexing (frequency division duplexing, FDD) spectrum. Alternatively, the first information may indicate whether there is a RACH resource and whether there is a RACH channel in a time interval T. This manner is applicable to a time division duplexing (time division duplexing, TDD) spectrum or an FDD single-sided operating spectrum. For example, the first information is a beacon in FIG. 5.

In a possible manner, the time domain resource configuration is a one-time RACH resource configuration, which takes effect only once after the first information is received, and may take effect immediately or after a time interval. For example, the first information may include the first parameter (indicating the maximum quantity of slots) or a quantity of resources (which may be a quantity of time domain resources or a quantity of frequency domain resources) for access. Optionally, the first information may not include information such as a mask or an identifier of a selected tag. The time interval may be specified in a protocol, or may be configured by the network device. A configuration message may be the first information.

The first access time domain resource may alternatively be periodically configured, and the first information includes time domain configuration information. In an example, the time domain configuration information indicates that there is the first access time domain resource after every N first transmission periodicities. Specifically, the first access time domain resource may take effect after every N first transmission periodicities, or the first access time domain resource may take effect after a time period T following every N first transmission periodicities. The first access resource may be one access opportunity, or may be a plurality of access opportunities. The plurality of access opportunities are configured by the network device or specified in a protocol. N may be specified in a protocol or configured by the network side for the terminal. A configuration message may be the first information.

Further, the time domain resource configuration may be further configured as a periodic configuration with limited duration, that is, there is a periodic RACH resource (or access resource) only in a specific time period. For example, a total quantity of periodic first access time domain resources is configured as M, or in a time period T1, there is the first access time domain resource after every N first transmission periodicities, where M and N are positive integers, and the first transmission periodicity is a transmission periodicity of the first information. M, N, and T1 may be configured by the network device for the terminal or specified in a protocol. A configuration message may be the first information. It should be noted that first information for sending the indication information may be the same as or different from the first information corresponding to the first transmission periodicity herein. For example, the first information for sending the indication information may be a beacon, a system message, or paging, and a signal after every first transmission periodicity may be a beacon, or may be any one of the following: SI, a synchronization signal, a query, or paging. This is not limited herein.

Specifically, the periodic configuration may be implemented in the following two manners:
In one manner, the first information may carry the periodic configuration and an optional offset configuration. After receiving the configurations, the terminal device determines a random access resource based on a received periodicity and an optional offset. For example, if received signaling includes 10 ms, the terminal device determines that there is a RACH resource at a 10^{th} millisecond after the signaling is received. If the received signaling further includes offset (offset) information of 5 ms, there is a first RACH resource at a 5^{th} millisecond after the signaling is received, and there is a second RACH resource at a 15^{th} millisecond after this configuration is received.

Further, the network device may broadcast time or frame information, and the terminal device may calculate a periodic resource by using a specific time as a start point. Alternatively, when the base station broadcasts the frame information, after receiving a configuration, the terminal device may calculate a periodicity and an offset by using a frame 0 as a start point.

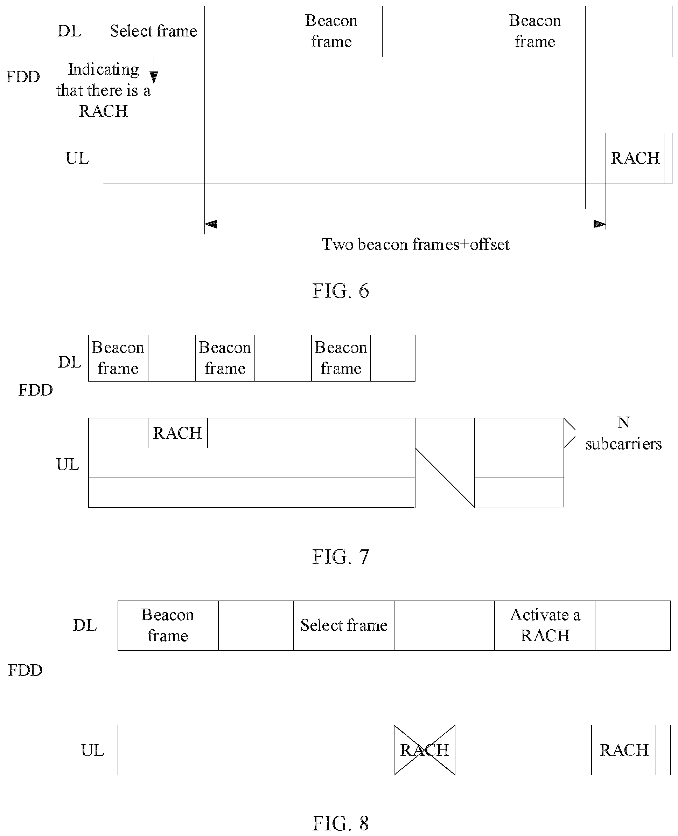

In the other manner, the first information includes a relationship between the RACH resource and the first information, for example, there is one RACH resource for every N beacons, or there is one RACH resource after one offset following N beacons. The relationship between the RACH resource and the beacon is indicated, so that the time domain resource configuration is less dependent on a clock capability of the terminal device. N may be configured by the network device for the terminal or specified in a protocol. A configuration message may be the first information. As shown in FIG. 6 which is a diagram of another indication, the network device delivers a select instruction indicating that there is a RACH resource after one offset following two beacons. Herein, the beacon is merely an example, and other information may be used. This is not limited herein. The beacon may be replaced with another message or signal included in the first information, for example, a reference signal or a synchronization signal.

For the periodic configuration with limited duration, on the basis of the periodic configuration, it may be additionally indicated that the periodic configuration remains in effect in N periodicities/or in the time period T1, where N is greater than or equal to 1. In other words, the terminal device can use the periodically configured RACH resource only in the N periodicities or only in the time period T1. N and T1 may be configured by the network device for the terminal or specified in a protocol. A configuration message may be the first information.

In this embodiment of this application, the first information includes frequency domain configuration information, the first access resource includes a first access frequency domain resource, and the frequency domain configuration information indicates that the first access frequency domain resource and the first information are a same resource block (resource block, RB) or at a same frequency domain position, and indicates a quantity of offset RBs and an offset direction of the RB that the first information is on.

The first access frequency domain resource may be a frequency domain resource that the first information is on, or the first access frequency domain resource is a physical channel near an initial physical channel. In this embodiment of this application, the first access resource may include only the first access time domain resource, or may include only the first access frequency domain resource, or may include both the first access time domain resource and the first access frequency domain resource. This is not limited herein.

Specifically, the first information may indicate that a RACH resource is consistent with a frequency domain resource of downlink first information or other downlink signaling, for example, the RACH resource and the frequency domain resource are a same RB.

An indication manner of the frequency domain configuration information is: indicating at least one of the following: a frequency domain offset from the frequency domain resource for receiving the first information, an absolute frequency domain position, a frequency domain bandwidth, and a quantity of frequency domain resources.

In an example, at least one of the following is indicated: a quantity of RBs between the first access frequency domain resource and the frequency domain resource for receiving the first information, a quantity of contiguous available RBs, or a quantity of available RBs indicated by using a bitmap. For example, if the first information carries only a quantity (n) of offset RBs, it indicates that the RACH is at an n^{th} RB offset from the RB that the first information is on (greater than a current RB value). If the first information carries the quantity (n) of offset RBs and the offset direction (lower than or higher than), it indicates that the RACH is at an n^{th} RB offset in the offset direction from the RB that the first information is on. The offset direction may be forward, backward, upward, or downward (a direction lower than a current frequency or a direction higher than a current frequency). This is not limited herein. The first information may further carry a quantity of available RBs and the offset direction, for example, may indicate that the RACH is in n RBs at a corresponding position in the offset direction from the RB that the first information is on.

In an example, the frequency domain configuration information further indicates that the first access frequency domain resource is a frequency division unit in a specific RB.

Specifically, in Manner 1, in addition to indicating a specific RB or a plurality of specific RBs, the frequency domain configuration information further needs to indicate a frequency division unit, and a quantity of contiguous or discrete frequency division units in the specific RB or in the plurality of specific RBs, or indicate an available frequency division unit by using a bitmap. For example, in addition to an indicated RB, sent indication information may further indicate whether each frequency domain unit in the RB is available, or indicate an available frequency domain unit in the RB. For example, a basic frequency domain unit is 5 kHz, and the frequency domain configuration information may indicate specific frequency domain units that can be used for random access in a first resource block. Refer to FIG. 7. An uplink UL channel may be divided into a plurality of frequency division units. In the figure, three frequency division units are used as an example, and each frequency division unit has a plurality of subcarriers. Each preamble (preamble) may occupy N subcarriers. For example, N=1, a subcarrier spacing (subcarrier spacing, SCS)=15 kHz, and a bitmap is 10-bit and indicates whether an RB is available for frequency division. If the preamble is 8-bit, one subcarrier (15 kHz) is used, a quantity of repetitions is 4, and a transmission time is about 2 ms. The frequency domain unit herein may also be equal to the subcarrier spacing.

In Manner 2, the frequency domain configuration information indicates a start RB and/or a start carrier, and a quantity of contiguous/non-contiguous carriers or a quantity of contiguous/non-contiguous frequency division units. Specifically, the frequency domain configuration information may further include indication information, indicating a frequency domain resource in a direction lower than a center frequency of a start RB or a first RB or lower than a frequency of a start carrier, or a frequency domain resource in a direction higher than the center frequency of the start RB or the first RB or higher than the frequency of the start carrier.

Alternatively, the first information in this embodiment of this application may not include the frequency domain configuration information, and a frequency domain of the first information, downlink data, or a signal that is received by the terminal device is an access physical channel by default.

Optionally, in this embodiment of this application, the first information may further include a piece of indication information, indicating that the frequency domain configuration only indicates to configure an access resource for a terminal that has an MO service or signaling requirement. This is not limited herein.

Step 402: The terminal device determines the first access resource based on the first information.

In this embodiment, when the terminal device has a terminal-originated or mobile-originated (mobile-originated, MO) service (for example, periodic reporting of sensor data or a registration procedure), one access resource may be selected from the access resources indicated by the first information, as the first access resource. The first access resource includes the first access time domain resource and/or the first access frequency domain resource. If the first information includes the time domain resource configuration, the terminal device may select one access time domain resource from a channel time domain resource indicated by the first information, that is, the first information indicates a slot range, and the terminal device randomly selects one time domain resource from the slot range as the first access time domain resource of the access resource. If the first information includes the frequency domain resource configuration, the first information further includes one frequency domain resource or a plurality of frequency domain resources. If the first information includes a plurality of frequency domain resources, one frequency domain resource may be randomly selected from the plurality of frequency domain resources as the first access frequency domain resource of the access resource. If there is only one resource, the resource is used as the first access frequency domain resource of the access resource by default.

Step 403: The terminal device sends an access request message to the first device on the first access resource, and correspondingly, the first device receives the access request message from the terminal device on the first access resource.

In this embodiment, after determining the first access resource, the terminal device may use the first access resource to upload the access request message to request access. Correspondingly, because the first access resource includes the first access time domain resource and/or the first access frequency domain resource, the terminal device sends the access request message to the network device on the first access time domain resource and/or the first access frequency domain resource. The following uses an example in which the first access resource includes only the first access time domain resource. For example, the access request message may include a preamble or a random number. To be specific, the terminal device may send a preamble or a random number (for example, RN 16 (random number 16)) to the network device on the first access time domain resource, to request access from the network device. If the terminal device sends a random number, the random number may be a 16-bit random number, or a random number of another length, and a bit length of the random number may be included in a RACH configuration. If the terminal device sends a preamble, the base station returns a response message after receiving the preamble, and the terminal device sends a random number again to perform access. The random number may be 16 bits or any other bit length configured by the base station or specified in a protocol. A configuration message may be the first information.

Step 404: The first device sends response information to the terminal device, and correspondingly, the terminal device receives the response information from the first device.

In this embodiment, after successfully receiving the access request message from the terminal device, the network device may respond to the terminal device, for example, may send the response information, for example, an acknowledgment (acknowledgment, ACK) character.

When the network device can normally receive the random number sent by the terminal device, the network device may send a response message or a collision resolution message to the terminal device, where the message may include the random number sent by the terminal device. When the network device fails to receive the access request message (the random number or the preamble) sent by the terminal device, the network device may re-access signaling to trigger a terminal device that experiences an access failure to perform access again. A moment at which the terminal device is triggered to perform access again may be a moment at which the access failure of the terminal device is found, or may be after a plurality of terminal devices complete access or fail to access.

After a terminal device with a failed MO service receives re-access signaling triggered by the base station, the terminal device attempts to access again. Specifically, the terminal device may reselect an access resource. An access resource configuration may be carried in re-access signaling sent by the network device.

Step 405: The terminal device transmits a first service or first signaling to the first device.

In this embodiment, after receiving the response information, the terminal device may determine, based on the response information, that access succeeds. Correspondingly, the terminal device may transmit the first service or the first signaling to the network device.

After completing data transmission, the network device may send an instruction to end a communication procedure with the current terminal device, and simultaneously trigger arrival of a next access slot. The instruction may be queryRep signaling.

If the network device configures a periodic RACH resource for the terminal device in the first service, a RACH resource (a second access resource) of second information (a beacon, paging, or the like) that the network device continues to deliver subsequently or a RACH resource of other downlink data may fully or partially collide with the periodic RACH resource (the first access resource). As a result, a problem occurs in service transmission of the network device. For example, the network device cannot receive an access request of the terminal device, or after sending an access request message, the terminal device receives another ongoing downlink service. As a result, the terminal device considers that access fails. Alternatively, if the terminal does not receive a correct response in a time period after sending an access request, the terminal device considers that access fails. The RACH resource herein may include a time domain resource and/or a frequency domain resource.

In this case, the terminal device may set the colliding periodic RACH resource to a deactivated state, which means that the colliding RACH resource cannot be used to perform an access procedure. For example, when a to-be-configured RACH resource arrives or has arrived, if a paging message appears, the terminal considers that the RACH resource cannot be used. Alternatively, when sending downlink data or downlink signaling, the base station determines that there may be a collision with the RACH resource, the base station can include indication information, in the downlink data or the downlink signaling, indicating that the RACH resource is in a deactivated state, namely, an unavailable state.

After a service or signaling of the second information is executed, the network device may send third indication information to activate the first time domain resource or the first frequency domain resource of the RACH resource, that is, it is considered that the RACH resource can be normally used by the terminal for access. For example, FIG. 8 is a diagram of another indication. When the terminal device receives, from the network device, second information (for example, select in the figure) indicating a channel access resource, and the terminal device determines that a resource collision occurs between a RACH resource and another service, the terminal device may inactivate the RACH resource. After the downlink service ends, the network device may send indication information to the terminal device, to indicate that an RACH configuration can be restored for use. This avoids the collision and an unnecessary access failure.

In an example, the first device may transmit first service data or the first signaling to a core network based on a transmission identifier. The transmission identifier may be preconfigured in the terminal device or a SIM card of the terminal device, and the transmission identifier indicates a transmission service, a transmission channel, or a transmission resource. The transmission identifier may also be represented as a slice identifier. The first device may obtain the transmission identifier from the first service data or the signaling sent by the terminal, or may determine the transmission identifier on the access resource. The following uses an example in which the first device transmits the transmission identifier and the first service data to the core network, where the first service data may alternatively be replaced with the first signaling.

The first device may send the transmission identifier and the first service data to the core network device, and the core network device forwards the transmission identifier and the first service data to an application layer based on the transmission identifier. The transmission identifier may be transmitted to a first network together with the first service data, or may be transmitted separately.

The first device may determine, based on the transmission identifier, an address of the core network for transmission, and send the first service data to the core network device. Correspondingly, the core network device may determine, based on the transmission identifier, an address of an uplink server for transmission, and send the first service data to an application layer server.

In another possible implementation, the first device determines the transmission identifier based on a specific resource accessed by the terminal device, and transmits data and the transmission identifier to the core network device and the application server.

In another possible implementation, the first service data carries address information, and the network device or the core network device may parse the address information, to transmit data to the application layer. After obtaining the address information, the network device sends the first service data to the core network device, and then the core network device sends the first service data to the application layer server.

In another implementation, the first device (base station) allocates an air interface resource corresponding to a transmission path or tunnel of the core network. The terminal device may select a corresponding resource that matches a service requirement of the terminal device to access a network and transmit data. The first device may determine the transmission identifier, the transmission path, or a transmission tunnel address based on a resource position at which the terminal sends the first service data, and send the first service data and/or the transmission identifier to the core network device. The core network device then sends the first service data to the application layer server.

Terminals of similar service types or a same uplink target server may share one transmission channel. The core network device may be an AMF, a UPF, an SMF, or another network device.

When a transmission identifier and data are transmitted between core network devices, the transmission identifier and the data may be transmitted between the AMF and the SMF, between the AMF and a network exposure function (network exposure function, NEF), between the SMF and the UPF, or the like. In other words, the transmission identifier and the first service data may be transmitted between different core network devices.

The present invention may also be extended to another scenario, for example, a downlink-triggered terminal access (paging) scenario. The terminal may directly reuse an access resource configured on the network side, without a need to allocate a separate resource for downlink-triggered terminal access again.

In this embodiment of this application, the network device sends the first information to the terminal device within coverage. When a service or signaling initiated by the terminal, for example, the first service or the first signaling, exists in the terminal device, the first access resource may be selected from the access resource in the first information, and then the access request message is sent to the network device on the first access resource. The first service or the first signaling is transmitted to the network device based on the response information of the network device. The terminal device determines a time at which the terminal device needs to perform access, reducing an uplink service processing delay.

In this specification, the first device may be a terminal or a base station.

The foregoing describes the random access method, and the following describes an apparatus for performing the method.

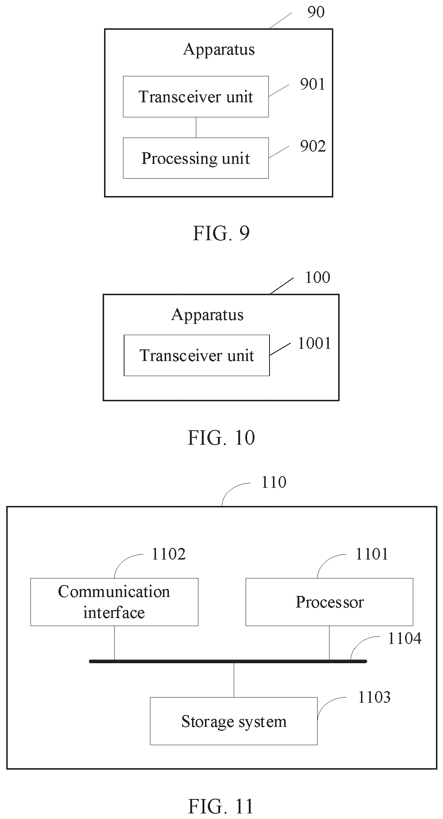

FIG. 9 is a diagram of a structure of a random access apparatus according to an embodiment of this application. The apparatus 90 includes:
a transceiver unit 901, configured to receive first information from a first device, where the first information includes an access resource of the terminal; and
a processing unit 902, configured to determine a first access resource based on the first information.

The transceiver unit 901 is further configured to: send an access request message to the first device on the first access resource, receive response information from the first device, and transmit a first service or first signaling to the first device, where the first service is a terminal-initiated service, and the first signaling is a terminal-initiated signaling procedure.

The transceiver unit 901 is configured to perform step 401, step 403, step 404, and step 405 in the method embodiment in FIG. 4. The processing unit 902 is configured to perform step 402 in the method embodiment in FIG. 4.

Optionally, the first information is one of the following: a beacon frame, a system message, a synchronization signal, or a reference signal.

Optionally, the first information includes time domain configuration information, the first access resource includes a first access time domain resource, and the time domain configuration information indicates whether there is the first access time domain resource at a sending moment of the first information or after a time period T following a transmission completion moment of the first information.

Optionally, the first information includes time domain configuration information, the first access resource includes a first access time domain resource, and the time domain configuration information indicates that there is the first access time domain resource after every N first transmission periodicities, there is the first access time domain resource after every N first transmission periodicities and a total quantity of first access time domain resources is M, or in a time period T1, there is the first access time domain resource after every N first transmission periodicities, where M and N are positive integers, and the first transmission periodicity is a transmission periodicity of the first information.

Optionally, the first information includes frequency domain configuration information, the first access resource includes a first access frequency domain resource, and the frequency domain configuration information indicates that the first access frequency domain resource and the first information are a same resource block RB, and indicates a quantity of offset RBs and an offset direction of the RB that the first information is on.

Optionally, the frequency domain configuration information further indicates that the first access frequency domain resource is a frequency division unit in a specific RB.

Optionally, the time domain configuration information includes one or more quantities of resources.

Optionally, the transceiver unit 901 is further configured to:
receive second information from the first device, where a second access resource occupied by the second information and/or a second access resource occupied by a procedure triggered by the second information fully or partially collide or collides with the first access resource; and
the processing unit 902 is configured to:
   set a colliding first access resource to a deactivated state, where the deactivated state indicates that the colliding first access resource is not available for an access procedure.

FIG. 10 is a diagram of a structure of another random access apparatus according to an embodiment of this application. The apparatus 100 includes:
a transceiver unit 1001, configured to: send first information to a terminal device, where the first information includes an access resource of the terminal, receive an access request message from the terminal device on a first access resource, where the first access resource is determined by the terminal device based on the first information, and send response information to the terminal device.

The transceiver unit 1001 is configured to perform step 401, step 403, and step 404 in the method embodiment in FIG. 4.

Optionally, the first information is one of the following: a beacon frame, a system message, a synchronization signal, or a reference signal.

Optionally, the first information includes time domain configuration information, the first access resource includes a first access time domain resource, and the time domain configuration information indicates whether there is the first access time domain resource at a sending moment of the first information or after a time period T following a transmission completion moment of the first information.

Optionally, the first information includes time domain configuration information, the first access resource includes a first access time domain resource, and the time domain configuration information indicates that there is the first access time domain resource after every N first transmission periodicities, there is the first access time domain resource after every N first transmission periodicities and a total quantity of first access time domain resources is M, or in a time period T1, there is the first access time domain resource after every N first transmission periodicities, where M and N are positive integers, and the first transmission periodicity is a transmission periodicity of the first information.

Optionally, the first information includes frequency domain configuration information, the first access resource includes a first access frequency domain resource, and the frequency domain configuration information indicates that the first access frequency domain resource and the first information are a same resource block RB, and indicates a quantity of offset RBs and an offset direction of the RB that the first information is on.

Optionally, the frequency domain configuration information further indicates that the first access frequency domain resource is a frequency division unit in a specific RB.

Optionally, the time domain configuration information includes one or more quantities of resources.

FIG. 11 is a diagram of a possible logical structure of a computer device 110 according to an embodiment of this application. The computer device 110 includes a processor 1101, a communication interface 1102, a storage system 1103, and a bus 1104. The processor 1101, the communication interface 1102, and the storage system 1103 are connected to each other through the bus 1104. In this embodiment of this application, the processor 1101 is configured to control and manage an action of the computer device 110. For example, the processor 1101 is configured to perform the steps performed by the terminal device in the method embodiment in FIG. 4. The communication interface 1102 is configured to support the computer device 110 in performing communication. The storage system 1103 is configured to store program code and data of the computer device 110.

The processor 1101 may be a central processing unit, a general-purpose processor, a digital signal processor, an application-specific integrated circuit, a field programmable gate array or another programmable logic device, a transistor logic device, a hardware component, or any combination thereof. The processor 1201 may implement or execute logical blocks, modules, and circuits in various examples described with reference to content disclosed in this application. Alternatively, the processor 1101 may be a combination implementing a computing function, for example, a combination of one or more microprocessors or a combination of a digital signal processor and a microprocessor. The bus 1104 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one bold line is used to represent the bus in FIG. 11, but this does not mean that there is only one bus or only one type of bus.

The transceiver unit 901 in the apparatus 90 is equivalent to the communication interface 1102 in the computer device 110, and the processing unit 902 in the apparatus 90 is equivalent to the processor 1101 in the computer device 110.

The computer device 110 in this embodiment may correspond to the terminal device in the method embodiment in FIG. 4. The communication interface 1102 in the computer device 110 may implement functions and/or steps implemented by the terminal device in the method embodiment in FIG. 4. For brevity, details are not described herein again.

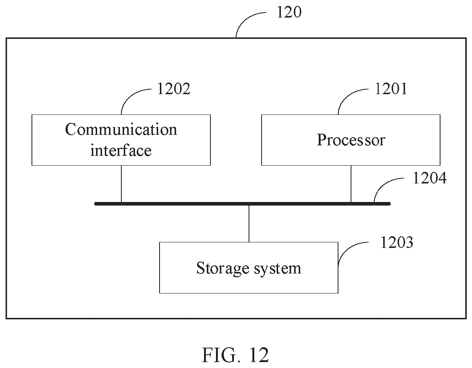

FIG. 12 is a diagram of a possible logical structure of a computer device 120 according to an embodiment of this application. The computer device 120 includes a processor 1201, a communication interface 1202, a storage system 1203, and a bus 1204. The processor 1201, the communication interface 1202, and the storage system 1203 are connected to each other through the bus 1204. In this embodiment of this application, the processor 1201 is configured to control and manage an action of the computer device 120. For example, the processor 1201 is configured to perform the steps performed by the first device in the method embodiment in FIG. 4. The communication interface 1202 is configured to support the computer device 120 in performing communication. The storage system 1203 is configured to store program code and data of the computer device 120.

The processor 1201 may be a central processing unit, a general-purpose processor, a digital signal processor, an application-specific integrated circuit, a field programmable gate array or another programmable logic device, a transistor logic device, a hardware component, or any combination thereof. The processor 1201 may implement or execute logical blocks, modules, and circuits in various examples described with reference to content disclosed in this application. Alternatively, the processor 1201 may be a combination implementing a computing function, for example, a combination of one or more microprocessors or a combination of a digital signal processor and a microprocessor. The bus 1204 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one bold line is used to represent the bus in FIG. 12, but this does not mean that there is only one bus or only one type of bus.

The transceiver unit 1001 in the apparatus 100 is equivalent to the communication interface 1202 in the computer device 120.

The computer device 120 in this embodiment may correspond to the first device in the method embodiment in FIG. 2. The communication interface 1202 in the computer device 120 may implement functions and/or steps implemented by the first device in the method embodiment in FIG. 2. For brevity, details are not described herein again.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a specific chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

In an example, a unit in any one of the foregoing apparatuses may be one or more integrated circuits configured to implement the foregoing method, for example, one or more application-specific integrated circuits (application-specific integrated circuit, ASIC), one or more microprocessors (digital signal processors, DSPs), or one or more field programmable gate arrays (field programmable gate arrays, FPGAs), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. For still another example, the units may be integrated and implemented in a form of a system-on-a-chip (system-on-a-chip, SoC).

In another embodiment of this application, a computer-readable storage medium is further provided. The computer-readable storage medium stores computer-executable instructions. When a processor of a device executes the computer-executable instructions, the device performs the method performed by the terminal device in the foregoing method embodiment.

In another embodiment of this application, a computer-readable storage medium is further provided. The computer-readable storage medium stores computer-executable instructions. When a processor of a device executes the computer-executable instructions, the device performs the method performed by the network device in the foregoing method embodiment.

In another embodiment of this application, a computer program product is further provided. The computer program product includes computer-executable instructions, and the computer-executable instructions are stored in a computer-readable storage medium. When the processor of the device executes the computer-executable instructions, the device performs the method performed by the terminal device in the foregoing method embodiment.

In another embodiment of this application, a computer program product is further provided. The computer program product includes computer-executable instructions, and the computer-executable instructions are stored in a computer-readable storage medium. When the processor of the device executes the computer-executable instructions, the device performs the method performed by the network device in the foregoing method embodiment.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed systems, apparatuses, and methods may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A random access method, comprising:
receiving, by a terminal device, first information from a first device, wherein the first information comprises an access resource of the terminal;
determining, by the terminal device, a first access resource based on the first information;
sending, by the terminal device, an access request message to the first device on the first access resource;
receiving, by the terminal device, response information from the first device; and
transmitting, by the terminal device, a first service or first signaling to the first device, wherein the first service is a terminal-initiated service, and the first signaling is a terminal-initiated signaling procedure.

2. The method according to claim 1, wherein the first information is one of the following: a beacon frame, a system message, a synchronization signal, or a reference signal.

3. The method according to claim 1 or 2, wherein the first information comprises time domain configuration information, the first access resource comprises a first access time domain resource, and the time domain configuration information indicates whether there is the first access time domain resource at a sending moment of the first information or after a time period T following a transmission completion moment of the first information.

4. The method according to claim 1 or 2, wherein the first information comprises time domain configuration information, the first access resource comprises a first access time domain resource, and the time domain configuration information indicates that there is the first access time domain resource after every N first transmission periodicities, there is the first access time domain resource after every N first transmission periodicities and a total quantity of first access time domain resources is M, or in a time period T1, there is the first access time domain resource after every N first transmission periodicities, wherein M and N are positive integers, and the first transmission periodicity is a transmission periodicity of the first information.

5. The method according to any one of claims 1 to 4, wherein the first information comprises frequency domain configuration information, the first access resource comprises a first access frequency domain resource, and the frequency domain configuration information indicates that the first access frequency domain resource and the first information are a same resource block RB, and indicates a quantity of offset RBs and an offset direction of the RB that the first information is on.

6. The method according to claim 5, wherein the frequency domain configuration information further indicates that the first access frequency domain resource is a frequency division unit in a specific RB.

7. The method according to claim 3, wherein the time domain configuration information comprises one or more quantities of resources.

8. The method according to any one of claims 1 to 7, wherein the method further comprises:
receiving, by the terminal device, second information from the first device, wherein a second access resource occupied by the second information and/or a second access resource occupied by a procedure triggered by the second information fully or partially collide or collides with the first access resource; and
setting, by the terminal device, the colliding first access resource to a deactivated state, wherein the deactivated state indicates that the colliding first access resource is not available for an access procedure.

9. A random access method, comprising:
sending, by a first device, first information to a terminal device, wherein the first information comprises an access resource;
receiving, by the first device, an access request message from the terminal device on a first access resource, wherein the first access resource is determined by the terminal device based on the first information; and
sending, by the first device, response information to the terminal device.

10. The method according to claim 9, wherein the first information is one of the following: a beacon frame, a system message, a synchronization signal, or a reference signal.

11. The method according to claim 9 or 10, wherein the first information comprises time domain configuration information, the first access resource comprises a first access time domain resource, and the time domain configuration information indicates whether there is the first access time domain resource at a sending moment or a transmission completion moment of the first information, or after a time period T following the transmission completion moment of the first information.

12. The method according to claim 9 or 10, wherein the first information comprises time domain configuration information, the first access resource comprises a first access time domain resource, and the time domain configuration information indicates that there is the first access time domain resource after every N first transmission periodicities, there is the first access time domain resource after every N first transmission periodicities and a total quantity of first access time domain resources is M, or in a time period T1, there is the first access time domain resource after every N first transmission periodicities, wherein M and N are positive integers, and the first transmission periodicity is a transmission periodicity of the first information.

13. The method according to any one of claims 9 to 12, wherein the first information comprises frequency domain configuration information, the first access resource comprises a first access frequency domain resource, and the frequency domain configuration information indicates that the first access frequency domain resource and the first information are a same resource block RB, a quantity of offset RBs and an offset direction of the RB that the first information is on.

14. The method according to claim 13, wherein the frequency domain configuration information further indicates that the first access frequency domain resource is a frequency division unit in a specific RB.

15. The method according to claim 11, wherein the time domain configuration information comprises one or more quantities of resources.

16. A random access apparatus, comprising:
a transceiver unit, configured to receive first information from a first device, wherein the first information comprises an access resource of a terminal; and
a processing unit, configured to determine a first access resource based on the first information, wherein
the transceiver unit is further configured to: send an access request message to the first device on the first access resource, receive response information from the first device, and transmit a first service or first signaling to the first device, wherein the first service is a terminal-initiated service, and the first signaling is a terminal-initiated signaling procedure.

17. The apparatus according to claim 16, wherein the first information is one of the following: a beacon frame, a system message, a synchronization signal, or a reference signal.

18. The apparatus according to claim 16 or 17, wherein the first information comprises time domain configuration information, the first access resource comprises a first access time domain resource, and the time domain configuration information indicates whether there is the first access time domain resource at a sending moment of the first information or after a time period T following a transmission completion moment of the first information.

19. The apparatus according to claim 16 or 17, wherein the first information comprises time domain configuration information, the first access resource comprises a first access time domain resource, and the time domain configuration information indicates that there is the first access time domain resource after every N first transmission periodicities, there is the first access time domain resource after every N first transmission periodicities and a total quantity of first access time domain resources is M, or in a time period T1, there is the first access time domain resource after every N first transmission periodicities, wherein M and N are positive integers, and the first transmission periodicity is a transmission periodicity of the first information.

20. The apparatus according to any one of claims 16 to 19, wherein the first information comprises frequency domain configuration information, the first access resource comprises a first access frequency domain resource, and the frequency domain configuration information indicates that the first access frequency domain resource and the first information are a same resource block RB, and indicates a quantity of offset RBs and an offset direction of the RB that the first information is on.

21. The apparatus according to claim 20, wherein the frequency domain configuration information further indicates that the first access frequency domain resource is a frequency division unit in a specific RB.

22. The apparatus according to claim 18, wherein the time domain configuration information comprises one or more quantities of resources.

23. The apparatus according to any one of claims 16 to 22, wherein the transceiver unit is further configured to:
receive second information from the first device, wherein a second access resource occupied by the second information and/or a second access resource occupied by a procedure triggered by the second information fully or partially collide or collides with the first access resource; and
the processing unit is further configured to:
set the colliding first access resource to a deactivated state, wherein the deactivated state indicates that the colliding first access resource is not available for an access procedure.

24. A random access apparatus, comprising:
a transceiver unit, configured to: send first information to a terminal device, wherein the first information comprises an access resource of the terminal, receive an access request message from the terminal device on a first access resource, wherein the first access resource is determined by the terminal device based on the first information, and send response information to the terminal device.

25. The apparatus according to claim 24, wherein the first information is one of the following: a beacon frame, a system message, a synchronization signal, or a reference signal.

26. The apparatus according to claim 24 or 25, wherein the first information comprises time domain configuration information, the first access resource comprises a first access time domain resource, and the time domain configuration information indicates whether there is the first access time domain resource at a sending moment or a transmission completion moment of the first information, or after a time period T following the transmission completion moment of the first information.

27. The apparatus according to claim 24 or 25, wherein the first information comprises time domain configuration information, the first access resource comprises a first access time domain resource, and the time domain configuration information indicates that there is the first access time domain resource after every N first transmission periodicities, there is the first access time domain resource after every N first transmission periodicities and a total quantity of first access time domain resources is M, or in a time period T1, there is the first access time domain resource after every N first transmission periodicities, wherein M and N are positive integers, and the first transmission periodicity is a transmission periodicity of the first information.

28. The apparatus according to any one of claims 24 to 27, wherein the first information comprises frequency domain configuration information, the first access resource comprises a first access frequency domain resource, and the frequency domain configuration information indicates that the first access frequency domain resource and the first information are a same resource block RB, and indicates a quantity of offset RBs and an offset direction of the RB that the first information is on.

29. The apparatus according to claim 28, wherein the frequency domain configuration information further indicates that the first access frequency domain resource is a frequency division unit in a specific RB.

30. The apparatus according to claim 26, wherein the time domain configuration information comprises one or more quantities of resources.

31. An apparatus, comprising a processor and a memory, wherein
the processor is configured to execute instructions stored in the memory, to enable the computer device to perform the method according to any one of claims 1 to 8.

32. An apparatus, comprising a processor and a memory, wherein
the processor is configured to execute instructions stored in the memory, to enable the computer device to perform the method according to any one of claims 9 to 15.

33. A computer-readable storage medium, wherein the computer-readable storage medium stores a computer program, and when the computer program is run on a computer, the computer is enabled to perform the method according to any one of claims 1 to 15.

34. A computer program product, wherein when the computer program product is executed on a computer, the computer performs the method according to any one of claims 1 to 15.
